## Europäisches Patentamt

## European Patent Office

## Office européen des brevets

(11) Veröffentlichungsnummer: **0 106 301 B1**

(12) **EUROPÄISCHE PATENTSCHRIFT**

(45) Veröffentlichungstag der Patentschrift:
**07.01.87**

(51) Int. Cl.⁴: **C 03 C 15/00**

(21) Anmeldenummer: **83110094.6**

(22) Anmeldetag: **10.10.83**

(54) Verfahren zum Polieren von Glasgegenständen in einem Schwefelsäure und Flusssäure enthaltenden Polierbad.

(30) Priorität: **13.10.82 DE 3238011**
**24.06.83 DE 3322875**

(43) Veröffentlichungstag der Anmeldung:
**25.04.84 Patentblatt 84/17**

(45) Bekanntmachung des Hinweises auf die Patenterteilung:
**07.01.87 Patentblatt 87/2**

(84) Benannte Vertragsstaaten:
**AT BE DE FR GB IT SE**

(56) Entgegenhaltungen:
**BE - A - 779 363**
**DE - C - 2 949 383**
**FR - A - 1 375 368**
**US - A - 1 777 321**
**US - A - 2 372 535**

**CHEMICAL ABSTRACTS, Band 84, Nr. 8, 23. Februar 1976, Seite 353, Nr. 49205u, Columbus, Ohio, US**

(73) Patentinhaber: **Sälzle, Erich, Dr., Nadistrasse 8, D-8000 München 40 (DE)**

(72) Erfinder: **Sälzle, Erich, Dr., Nadistrasse 8, D-8000 München 40 (DE)**

(74) Vertreter: **Wuesthoff, Franz, Dr.-Ing. et al, Patentanwälte Wuesthoff -v. Pechmann-Behrens-Goetz Schweigerstrasse 2, D-8000 München 90 (DE)**

# Beschreibung

Es ist bekannt, Glasgegenstände – und zwar sowohl Pressglas als auch geschliffene Glasgegenstände – auf chemischem Wege zu polieren, wobei ein Flusssäure und Schwefelsäure enthaltendes Polierbad angewandt wird. Durch die beim Säure-Polieren stattfindenden Reaktionen mit den Glasbestandteilen der Oberfläche der Gegenstände bildet sich auf dieser eine festhaftende Schicht aus Reaktionsprodukten. Diese Reaktionsprodukte sind im allgemeinen Sulfate, Fluoride und Silicofluoride der in den Gläsern enthaltenen Kationen. Diese Schicht an Reaktionsprodukten behindert den Poliervorgang, also die Einwirkung der Poliersäuren auf die Glasoberfläche, bis diese Reaktionen vollständig zum Stillstand kommen. Es war daher bisher immer erforderlich, diese Schicht aus Reaktionsprodukten des Poliervorgangs von der Glasoberfläche abzulösen, um das Polieren fortsetzen zu können. Dazu wurde das Polieren unterbrochen und der Überzug abgewaschen und dies viele Male wiederholt, bis der angestrebte Poliergrad erreicht war. Zum Abwaschen des Polierbelags wurde früher Wasser angewandt, was aber zu grossen Nachteilen führte, weil durch das abwechselnde Polieren und Waschen grosse Wassermengen in das Polierbad geschleppt werden, die dieses damit verdünnen, und andererseits Waschwässer mit solchen Säuregehalten anfallen, dass dies nicht nur zu einem ungebührlichen Säureverbrauch sondern auch zu schwerwiegenden Problemen führt, weil ja diese sauren Waschwässer, bevor sie in die Flüsse abgelassen werden können, in aufwendiger Weise neutralisiert werden müssen.

Aus der DE-C 29 49 383 ist es bekannt, aus der Poliersäure kontinuierlich, absatzweise oder von Zeit zu Zeit die gelösten Natrium- und/oder Kaliumionen zu entfernen, um dadurch die Polierzeit bei einem einzelnen Tauchvorgang wesentlich zu verlängern oder mit anderen Worten, die Wechselbehandlung von Polierbad und Waschbad auf einige wenige Male zu beschränken bzw. in einem einzigen Polier- und Waschvorgang die angestrebte Oberflächengüte zu erreichen. Diese Entfernung der Natrium- und/oder Kaliumionen aus dem Polierbad geschieht nach diesem Stand der Technik durch Zugabe von Silicofluorwasserstoffsäure, was zu einer Ausfällung der entsprechenden Silicofluoride führt, die dann beispielsweise durch Filtrieren oder Zentrifugieren von der Poliersäure entfernt werden. Zusätzlich zu Silicofluorwasserstoffsäure wurde auch Phosphor- und/oder Essigsäure und gegebenenfalls Malon-, Oxal- oder Weinsäure zur Verbesserung der Ausfällung in das Polierbad eingebracht. Eine andere Möglichkeit zur Entfernung der Alkaliionen aus dem Polierbad besteht nach diesem Stand der Technik in einer Elektrolyse in einer Quecksilberzelle oder einer Zelle mit einer kationensemipermeablen Membran, wobei die Alkaliionen der Poliersäure entzogen werden. Schliesslich besteht auch die Möglichkeit zur Entfernung der Alkaliionen aus der Poliersäure mit Hilfe eines Kationenaustauschers.

Nach dem Verfahren der älteren DE-A 31 23 908 wird im Polierbad neben Schwefelsäure eine extrem niedere Flusssäure-Konzentration, nämlich < 1% HF, insbesondere 0,5 bis 0,8% HF, angestrebt, um den Dissoziationsgrad der Flusssäure möglichst hoch zu halten. Aus der US-A 17 77 321 aus 1930 ist ein Polierbad bekannt, welches aus Flusssäure, 30%-iger Schwefelsäure, Wasser und einer geringen Menge an rauchender Schwefelsäure unbekannter Konzentration hergestellt worden ist und dem als «controlling agent» etwa 0,7 g/l $P_2O_5$ zugesetzt worden sind.

Aus der DE-C 11 89 681 ist ein Polierbad mit einer Schwefelsäure-Konzentration zwischen 55 und 67% und einer Flusssäurekonzentration zwischen 5 und 7% bekannt, welches bei einer Temperatur zwischen 55 und 70 °C arbeitet und zur Beeinflussung der Konstitution des sich auf der Glasoberfläche bildenden Salzbelags ein Schwermetallsalz oder stark oxidierendes Kaliumpermanganat oder Chromoxid enthält.

Abgesehen von der Anzahl der erforderlichen Wechselbehandlungen in der Poliersäure und im Waschbad der zu polierenden Glasgegenstände, ist für ein wirtschaftliches Verfahren zum Polieren von Glasgegenständen auch der Verbrauch von Flusssäure und auch Schwefelsäure von besonderer Bedeutung. Der Säureverbrauch, insbesondere der Verbrauch an Flusssäure, ist abhängig von der Zusammensetzung des Polierbades und beeinflusst die Polierzeit einer Charge von Glasgegenständen bzw. die Anzahl an zu polierenden Chargen ohne der Notwendigkeit der Erneuerung oder Auffrischung des Polierbades. Die für den Poliervorgang wesentliche Abtraggeschwindigkeit eines Polierbades steht wegen des sich bei hoher Konzentration auf der Glasoberfläche dicht abscheidenden Salzbelages im umgekehrten Verhältnis zur Konzentration der Sulfationen und Fluoridionen im Bad.

Aufgabe der Erfindung ist nun ein Verfahren zum Polieren von Glasgegenständen in einem Polierbad, enthaltend Schwefelsäure, Flusssäure und eine nicht-oxidierende organische Säure und Abspülen der fertig polierten Gegenstände mit Schwefelsäure und/oder Wasser mit hoher Abtraggeschwindigkeit, also relativ kurzen Polierzeiten, während gleichzeitig die Arbeitsfähigkeit des Polierbades soweit verlängert ist, dass das Polierbad ohne spezielle Reinigungsmassnahmen oder zumindest teilweiser Erneuerung während der 8h-Schicht arbeitsfähig ist, während die Leistungsfähigkeit des Polierbads und die Polierqualität allen Anforderungen entspricht.

Die im Polierbad zugesetzten organischen Säuren sind stärker als Flusssäure und gegebenenfalls stärker als die zweite Dissoziationsstufe der Schwefelsäure, wodurch die Konzentration an Fluoridionen und gegebenenfalls an Sulfationen im Polierbad durch gehemmte Dissoziation der entsprechenden Säuren nieder gehalten wird. Gerade beim Polieren von mit grobem Schliff versehenen Glasgegenständen ist es wesentlich, die Fluoridionen-Konzentration möglichst nieder zu halten. Um derartige Glasgegenstände in einem einzigen Tauchvorgang auf den gewünschten Poliergrad zu bringen, muss die Fluoridionen-Konzentration besonders tief gehalten werden, damit der sich bei der Polierreaktion bildende Niederschlag in so feiner Form und mit so geringem Haftvermögen an der Oberfläche der Glasgegenstände entsteht, dass er nicht fest haftet.

Diese Zugabe von Säuren, die stärker sind als Flusssäure und vorzugsweise auch eine höhere Dissoziationskonstante als die zweite Stufe der Schwefelsäure besitzen, ist streng zu unterscheiden von der Zugabe von Silicofluorwasserstoffsäure zur Ausfällung der Natrium- und/oder Kaliumsilicofluoride nach der DE-C 29 49 383. Dort wird die Entfernung der Alkaliionen durch Säurezusatz aus dem Polierbad angestrebt, wohingegen hier es um die Zurückdrängung der Dissoziation der in dem Polierbad enthaltenen Flusssäure und Schwefelsäure auf ein solches Ausmass angestrebt wird, dass in Folge der niederen $SO_4''$-Konzentration und insbesondere F'-Konzentration eine hohe Abtraggeschwindigkeit, entsprechend geringen Polierzeiten bzw. eine minimale Anzahl an Wechselbehandlungen im Polierbad und im Waschbad erforderlich werden.

Für das erfindungsgemässe Polierbad eignen sich Monocarbonsäuren wie Essigsäure, Dicarbonsäuren wie Oxalsäure, Malonsäure oder Phthalsäure, Hydroxycarbonsäuren wie Weinsäure oder Citronensäure, soweit sie die obige Forderung, nämlich eine stärkere Säure als Flusssäure zu sein, erfüllen. Silicofluorwasserstoffsäure ist hier nicht geeignet, weil sich deren Konzentration unter den herrschenden Verfahrensbedingungen nicht einstellen lässt infolge der ständigen Neubildung im Bad und der temperaturabhängigen Verflüchtigung (als $SiF_4$) aus dem Bad. Eine stark oxidierende Säure wie Chromsäure ist wegen ihrer starken Oxidationswirkung nicht geeignet.

Bisher war es nur möglich, die Dissoziation von Fluorwasserstoff und damit die Konzentration an Fluoridionen im Polierbad über die Konzentration der Schwefelsäure und die Badtemperatur zu regeln. Nachteilig bei dieser Methode ist es, dass für einwandfreie Poliervorgänge die Konzentration an Sulfationen zu der von Fluoridionen in einem bestimmten Verhältnis stehen muss. Es war daher bisher erforderlich, beim Polieren von Natrongläsern mit Diamantschliff mit höchstmöglicher Schwefelsäurekonzentration zu arbeiten, damit die Dissoziation von Fluorwasserstoff und damit die Fluoridkonzentration im Polierbad soweit herabgedrückt wird, dass auch diese Gläser mit diesem Grobschliff in einem Langzeitprogramm mit vielen Badwechsel-Behandlungen poliert werden konnten.

Durch die Massnahme, dem Polierbad eine stärkere Säure als Flusssäure zuzusetzen, gelingt es erstmals, unabhängig von der Schwefelsäurekonzentration die Fluoridionen-Konzentration auf solche Werte herabzudrücken, dass die bei der Polierreaktion entstehenden Salze eine solche Zusammensetzung, Struktur und ein solches Haftungsvermögen an der Oberfläche des Glasgegenstandes haben, dass der Poliervorgang ohne Unterbrechung über längere Zeit geführt werden kann und insbesondere schon durch eine einmalige Tauchung der Glasgegenstände in das Bad bereits der erwünschte Poliergrad erreicht wird.

Ein weiterer Vorteil des erfindungsgemässen Verfahrens liegt darin, dass durch die von der Schwefelsäurekonzentration unabhängige Beeinflussung der Dissoziation der Flusssäure und damit der Fluoridionen-Konzentration im Polierbad das Polierverfahren ganz allgemein gesprochen unabhängig wird von der Kationen-Komponenten des Glases (Alkali, Erdalkali). Enthalten die zu polierenden Gläser Calcium, so wird man in diesem Fall dem Polierbad nicht Oxalsäure zusetzen, weil Calciumoxalat unlöslich ist und ausfallen würde. Jedoch stehen, wie oben bereits darauf hingewiesen, verschiedene andere brauchbare Säuren zur Verfügung. Bei kaliumhaltigen Gläsern wird man sinngemäss Weinsäure meiden, wegen der möglichen Bildung des schwer löslichen Kaliumtartrats.

Wie oben bereits darauf hingewiesen, ist es Voraussetzung für die Anwendbarkeit der Säuren, dass sie stärker sind, d.h. eine höhere Dissoziations-Konstante besitzen, als die Flusssäure. Zweckmässigerweise haben die Säuren auch eine Dissoziations-Konstante, die zumindest zwischen der ersten und zweiten Dissoziationsstufe der Schwefelsäure liegt, was für die meisten oben aufgezählten Säuren gilt. Oxalsäure hingegen hat eine Dissoziations-Konstante noch über der der zweiten Stufe der Schwefelsäure, so dass sich im Polierbad durch Oxalsäure auch die Sulfationen-Konzentration herabsetzen lässt. Daher wird bei dem erfindungsgemässen Verfahren Oxalsäure bevorzugt angewandt. Wird mit anderen Säuren gearbeitet, also solchen, deren Dissoziations-Konstante zwischen der ersten und zweiten Stufe der Schwefelsäure liegt, so lässt sich die Konzentration der Sulfationen nur durch die Schwefelsäurekonzentration und Temperatur des Polierbades beeinflussen. Je höher die Temperatur des Polierbades ist, um so weitergehend ist Schwefelsäure dissoziiert. Man wird daher zu hohe Badtemperaturen vermeiden. Man kann mit dieser Methode sogar bei Raumtemperatur arbeiten, was aber verlängerte Polierzeiten bedingt.

Die dem Polierbad aus Schwefelsäure und Flusssäure zuzusetzende Säuremenge hängt in gewissem Grad von der Konzentration der Schwefelsäure bzw. Flusssäure ab. Für ein Polierbad, enthaltend 40 bis 65 Gew.-% $H_2SO_4$ und 1,5 bis 12 Gew.-% HF, ist ein Säurezusatz von 1 bis 20 g/l im allgemeinen entsprechend. Bei einem Polierbad, enthaltend 45 bis 60 Gew.-% $H_2SO_4$ und 1,5 bis 6 Gew.-% HF, wird man 1 bis 11 g/l zusetzen.

Zusätzlich zu den oben bereits erwähnten Vorteilen bietet das erfindungsgemässe Verfahren auch den Vorteil, dass gegenüber bekannten Verfahren mit einer beträchtlichen Anzahl von Wechselbehandlungen der Verbrauch an Flusssäure und die Abgabe von Siliciumfluorid an die Abluft herabgesetzt werden kann, so dass die Umweltbelastung bzw. der Aufwand für die Gaswäsche der Abluft nicht so gross ist. Durch die kürzere benötigte Polierzeit und die Einstellung der zweckmässigsten Fluoridionen-Konzentration ist auch der Verbrauch an Fluss- und Schwefelsäure gegenüber dem bekannten Verfahren wesentlich verringert. Da der angestrebte Poliergrad bereits nach Abtrag einer minimalen Glasmenge erreicht werden kann, ist die Schlammbildung im Polierbad entsprechend gering.

Die Konzentration der Schwefelsäure im Polierbad hängt von der Zusammensetzung des zu polierenden Glases ab; dies gilt insbesondere für Gläser, die Erdalkaliionen, insbesondere Calcium, enthalten. In obigem Polierbad nach der Erfindung beträgt die Schwefelsäure-Konzentration 35 bis 75% und soll für erdalkalihaltige Gläser nur 60 bis 75%-ig sein. Geht man mit der Schwefelsäure-Konzentration höher, so kommt es zu Polierfehlern. Dieser enge Schwefelsäure-Konzentrationsbereich des Polierbades für Erdalkaligläser ist für die grosstechnische Betriebsführung nachteilig. Beim Abkühlen der Poliersäure kann die Abscheidung der Erdalkaliionen unzureichend sein, so dass der Verbrauch an Schwefelsäure relativ hoch werden kann.

Setzt man dem Polierbad jedoch erfindungsgemäss 0,1 bis 5 g/l Natrium- und/oder Kaliumchlorid zu, so ist es ohne spezielle Reinigungsmassnahmen oder zumindest teilweiser Erneuerung während einer 8h-Schicht arbeitsfähig, während die Leistungsfähigkeit des Polierbads und die Polierqualität allen Anforderungen entspricht. Wird Natrium- und Kaliumchlorid angewandt, so ist im allgemeinen die zuzusetzende Gesamtmenge etwas geringer, insbesondere um etwa 10% geringer, als bei der Zugabe von nur einem Salz.

Das Absinken der Wirksamkeit des Polierbades zeigt sich in einer allmählichen Verlängerung der Gesamtpolierzeit einer Charge bzw. der Notwendigkeit, mehrere Wechselbehandlungen im Polierbad und im Waschbad durchzuführen, oder auch darin, dass bei fortschreitender Arbeitszeit des Polierbades örtliche Polierfehler auftreten, die sich z.B. als bläuliche Anätzung an der Oberfläche der Glasgegenstände zeigen.

Ist die Gesamtpolierzeit, die zur Erreichung des angestrebten Poliergrades bei der jeweiligen Charge notwendig ist, um einen gewissen Anteil angestiegen, beispielsweise um 25 bis 50%, oder zeigen sich die ersten Anzeichen für Polierfehler wie bläuliches Anlaufen oder Anätzen, so gibt man nach der Erfindung Natrium- und/oder Kaliumchlorid in das Polierbad, wodurch in den meisten Fällen unmittelbar die Polierfehler an der gerade bearbeiteten Charge wieder verschwinden. Auch stellt man fest, dass nach einer kurzen Zeit, die zwischen etwa 10 und 20 min betragen kann, sich die Gesamtpolierzeit, die für den gewünschten Poliergrad der jeweiligen Charge erforderlich ist, wieder auf das normale Mass reduziert hat.

Mit dem nach dem erfindungsgemäss verbesserten Bad lässt sich dann bei einwandfreier Qualität der Politur, wirtschaftlicher Betriebsführung und geringem Säureverbrauch arbeiten, bis es neuerlich zu einem Absinken der Wirksamkeit des Polierbades kommt und man wieder Salz einbringen muss. Im allgemeinen reicht es jeoch aus, in etwa in der Mitte einer 8stündigen Schichtzeit einmal Salz zuzusetzen, um während der gesamten Schichtzeit ohne zusätzliche Reinigungsmassnahmen oder Baderneuerung arbeiten zu können. Bei Schichtende kann das Polierbad regeneriert bzw. erneuert werden oder es wird durch neuerliche Salzzugabe wieder optimal wirksam.

Es wird darauf hingewiesen, dass der durch die erfindungsgemässe Salzzugabe erreichte Effekt nicht erreicht wird, wenn man dem Polierbad nur Salzsäure zusetzt.

Überraschenderweise konnte durch die Salzzugabe in ein Polierbad, welches neben Schwefelsäure und Flusssäure noch die organische Säure enthält, die Aufnahmefähigkeit des Polierbades für Calciumionen und auch andere zwei- oder dreiwertige Ionen, wie Zink und Bor, in ungewöhnlichem Masse gesteigert werden. Bei dem salzhaltigen Bad nach der Erfindung wird gegenüber dem Stand der Technik die Anzahl der benötigten Wechselbehandlungen zwischen Polierbad und Waschbad stark verringert. Darüberhinaus ist es auch möglich, in einem sogenannten Einbadverfahren Gläser ohne Wechselbehandlung einwandfrei zu polieren, indem die Glasgegenstände nur einmal während geringfügig längerer Zeit in das Polierbad getaucht und nach direktem Erreichen des angestrebten Poliergrades abgewaschen werden können.

Mit dem erfindungsgemäss angewandten Polierbad ist es jedoch nicht zwingend notwendig, bei Schichtende oder täglich durch Aussalzen das Polierbad zu regenerieren, da eine Wiederauflösung ausgefallener Salze beim Anwärmen des Polierbads für die erste Charge nicht erfolgt.

Ein weiterer wesentlicher Vorteil ist – wie oben bereits darauf hingewiesen, – dass man mit dem salzhaltigen Polierbad nach der Erfindung hinsichtlich der Schwefelsäure-Konzentration nicht in engen Grenzen festgelegt ist, sondern auch mit höherer Schwefelsäure-Konzentration arbeiten kann, was insbesondere für CaO-haltige Gläser im Hinblick auf die Gesamtpolierzeit einer Charge erstrebenswert ist. Der arbeitsfähige Bereich der Schwefelsäure-Konzentration liegt bei dem salzhaltigen Verfahren zwischen 35 und 75 Gew.-% $H_2SO_4$ – gegenüber einer oberen Grenze von 65% ohne Salzzusatz –, während die salzhaltigen Polierbäder nach der Erfindung für calciumoxidhaltige Gläser Schwefelsäure-Konzentration zwischen 60 und 75 Gew.-% gegenüber 60 bis 65%, wie erwähnt – zulassen.

Ein weiterer Vorteil des salzhaltigen Polierbades liegt darin, dass die Temperatur des Polierbades während des Poliervorgangs ungewöhnlich nieder gehalten werden kann. Im allgemeinen war es bisher notwendig, die Temperatur des Polierbades zwischen etwa 50 und 65 °C zu halten. Es ist also nach der Erfindung nicht nur möglich, mit höheren Schwefelsäurekonzentrationen – und den damit verbundenen Vorteilen – ohne der Gefahr eines «Verbrennens» der Oberflächen der Glasgegenstände – zu arbeiten, sondern darüberhinaus auch bei Temperaturen, die wesentlich unter denen liegen, die bisher für das Säurepolieren von Glasgegenständen üblich waren oder als möglich angesehen wurden. So lässt sich das erfindungsgemässe Verfahren einwandfrei bei einer Badtemperatur von 20 bis 40 °C durchführen.

Besonders zweckmässig ist die Anwendung des erfindungsgemässen Verfahrens für Röhren von Bildschirmgeräten, Fernsehröhren u.dgl., die mit Diamantscheiben geschliffen und dann sandgestrahlt worden sind. Durch das erfindungsgemässe Verfahren erhalten bei kürzesten Tauchzeiten – wie etwa 20 s oder 2·10 s – diese Glasteile einen Poliergrad, wie man ihn bisher bei derartigen Gegenständen noch nicht erreichen konnte.

Das erfindungsgemässe Verfahren wird anhand der folgenden Beispiele weiter erläutert.

Beispiel 1
In einem Polierbad, enthaltend 70% Schwefelsäure und 4,5% Flusssäure sowie 2,5 g/l Weinsäure – 50 °C – wurden Gegenstände aus einem Glas, enthaltend 24% PbO und 4% CaO, poliert und zwar erfolgte der gesamte Poliervorgang – je nach Schliffart der Gegenstände – in Form einer 4-maligen bzw. 5-maligen Wechselbehandlung durch Tauchen in das Polierbad und anschliessendes Tauchen in ein Schwefelsäurewaschbad. Die gesamte Polierzeit, also die Zeit, während die Gegenstände sich im Polierbad befanden, war anfänglich 12 min und stieg im Laufe einer Arbeitszeit von 4 h auf 20 min.
Nun wurden dem Polierbad 0,3 g NaCl, bezogen auf 1 l Polierbad, zugesetzt und nach einer Wartezeit von ca. 15 min konnte das Polieren einer neuen Charge von Glasgegenständen wieder innerhalb von 15 min stattfinden.
Gegen Ende der Arbeitszeit von 4 h und der Verlängerung der Gesamtpolierzeit einer Charge auf 20 min zeigte sich auf den Glasgegenständen eine leichte blaue Anätzung, die nach Zugabe der Salzlösung sofort verschwand.

Beispiel 2
Entsprechend obigem Beispiel wurden in einem Polierbad, enthaltend 65% Schwefelsäure, 8% Flusssäure und 6 g/l Oxalsäure, bei einer Temperatur von 39 °C Gegenstände aus einem Glas, enthaltend 28% PbO, ohne Wechselbehandlungen, also in einem Einbadverfahren, innerhalb von 3,5 min bis zum gewünschten Poliergrad poliert. Nach einer Arbeitszeit des Bades von etwa 4 h traten vereinzelt blaue Anätzungen auf den Glasgegenständen auf und die Polierzeit stieg allmählich auf 5 min an. Nach Zugabe von 0,5 g/l NaCl und einer Wartezeit von 15 min traten keine Polierfehler mehr auf und die Polierzeit stellte sich wieder auf 3,5 bis maximal 4 min ein.

**Patentansprüche**
1. Verfahren zum Polieren von Glasgegenständen in einem Polierbad, enthaltend 35 bis 75 Gew.-% Schwefelsäure, 1,5 bis 12 Gew.-% Flusssäure und 1 bis 30 g/l einer oder mehrerer nicht-oxidierender organischer Säure(n), die stärker als Flusssäure ist (sind), und Abspülen der fertig polierten Gegenstände mit Schwefelsäure und/oder Wasser, dadurch gekennzeichnet, dass man innerhalb einer 8h-Schicht bei Absinken der Wirksamkeit des Polierbads und beginnendem Auftreten von Polierfehlern 0,1 bis 5 g Natriumchlorid und/oder Kaliumchlorid – bezogen auf Liter Polierbad – zusetzt.
2. Verfahren nach Anspruch 1, dadurch gekennzeichnet, dass man Natrium- und/oder Kaliumchlorid portionenweise nach einer Arbeitszeit des Polierbades von etwa 4 h zusetzt.
3. Verfahren nach Anspruch 1 oder 2, dadurch gekennzeichnet, dass man bei einer Temperatur von 20 bis 40 °C poliert.
4. Verfahren nach Anspruch 1 bis 3 zum Polieren von Glasgegenständen aus erdalkalihaltigem Glas, dadurch gekennzeichnet, dass man mit einem 60 bis 75 Gew.-% Schwefelsäure enthaltenden Polierbad poliert.
5. Verfahren nach Anspruch 1 bis 4, dadurch gekennzeichnet, dass man als Säure eine solche verwendet, die auch stärker als die 2. Dissoziationsstufe der Schwefelsäure ist.
6. Verfahren nach Anspruch 1 bis 5, dadurch gekennzeichnet, dass man als Säure Monocarbon-, Dicarbon- oder Hydroxysäure(n) verwendet.
7. Verfahren nach Anspruch 6, dadurch gekennzeichnet, dass man Oxalsäure, Malonsäure, Weinsäure und/oder Citronensäure verwendet.

**Revendications**
1. Procédé pour polir des objets en verre dans un bain de polissage contenant 35 à 75% en poids d'acide sulfurique, 1,5 à 12% en poids d'acide fluorhydrique et 1 à 30 g/l d'un ou de plusieurs acides organiques non-oxydants, qui sont plus forts que l'acide fluorhydrique, avec rinçage des objets polis finis à l'acide sulfurique et/ou à l'eau, caractérisé en ce que, au cours d'un poste de travail de 8 heures, lorsque l'efficacité du bain de polissage diminue et qu'il commence à apparaître des défauts de polissage, on ajoute 0,1 à 5 g de chlorure de sodium et/ou de chlorure de potassium – rapporté à un litre de bain de polissage.
2. Procédé selon la revendication 1, caractérisé en ce qu'après un temps de travail du bain de polissage d'environ 4 heures, on ajoute à proportion du chlorure de sodium et/ou du chlorure de potassium.
3. Procédé selon la revendication 1 ou la revendication 2, caractérisé en ce que le polissage s'effectue à une température de 20 à 40 °C.
4. Procédé selon les revendications 1 à 3, pour polir des objets en verre contenant des alcalino-terreux, caractérisé en ce que le polissage se fait avec un bain de polissage contenant 60 à 75% d'acide sulfurique.

5. Procédé selon les revendications 1 à 4, caractérisé en ce que comme acide on emploie un acide qui est plus fort que le second étage de dissociation de l'acide sulfurique.

6. Procédé selon les revendications 1 à 5, caractérisé en ce que l'on emploie comme acide un ou des acides monocarboniques, bicarboniques ou hydroxycarboniques.

7. Procédé selon la revendication 6, caractérisé en ce que l'on utilise l'acide oxalique, l'acide malonique, l'acide tartrique et/ou l'acide citrique.

**Claims**

1. A method of polishing articles of glass in a polishing bath containing 35 to 75 weight percent of sulfuric acid, 1.5 to 12 weight percent of hydrofluoric acid and 1 to 30 g/l of one or more non-oxidizing organic acid(s) which is (are) stronger than hydrofluoric acid, and rinsing the finished polished articles with sulfuric acid and/or water, characterized in that 0.1 to 5 g sodium chloride and/or potassium chloride – based on one liter of polishing bath – is added during an 8-hour shift, upon decrease in the polishing bath's effectiveness and the appearance of polishing flaws.

2. The method as claimed in claim 1, characterized in that sodium chloride and/or potassium chloride is added in portions after a polishing bath operation time of approximately 4 hours.

3. The method as claimed in claim 1 or claim 2, characterized polishing takes place at a temperature of between 20 and 40 °C.

4. The method as claimed in claims 1 to 3 for polishing glass articles of glass containing alkaline earth, characterized in that polishing takes place with a polishing bath containing 60 to 75 weight percent of sulfuric acid.

5. The method as claimed in claims 1 to 4, characterized in that as acid such a one is used which is also stronger than the second dissociation stage of sulfuric acid.

6. The method as claimed in claims 1 to 5, characterized in that monocarboxylic, dicarboxylic or hydroxycarboxylic acid(s) is/are used as acid.

7. The method as claimed in claim 6, characterized in that oxalic acid, malonic acid, tartaric acid and/or citric acid is/are used.